# EUROPÄISCHE PATENTSCHRIFT

(11) **EP 3 867 084 B1**
(45) Veröffentlichungstag und Bekanntmachung des Hinweises auf die Patenterteilung: **02.11.2022**
(21) Anmeldenummer: 19769785.7
(22) Anmeldetag: 16.09.2019
(51) Int. Cl.: B60G 7/00, F16C 11/06

(54) **FAHRWERKBAUTEIL FÜR EINE RADAUFHÄNGUNG SOWIE VERFAHREN ZUR HERSTELLUNG EINES FAHRWERKBAUTEILS**
CHASSIS COMPONENT FOR A WHEEL SUSPENSION AND METHOD FOR PRODUCING A CHASSIS COMPONENT
ÉLÉMENT DE TRAIN DE ROULEMENT CONÇU POUR UNE SUSPENSION DE ROUE ET PROCÉDÉ POUR PRODUIRE UN ÉLÉMENT DE TRAIN DE ROULEMENT

(30) Priorität: 15.10.2018 DE 102018217642
(43) Veröffentlichungstag der Anmeldung: 25.08.2021
(73) Patentinhaber: ZF Friedrichshafen AG, 88046 Friedrichshafen (DE)
(72) Erfinder: SIEVE, Manfred, 49393 Lohne (DE); BRONSWICK, Philipp, 49179 Ostercappeln (DE); PABST, Jan, 49082 Osnabrück (DE)
(74) Vertreter: ZF Friedrichshafen AG
(86) Internationale Anmeldenummer: PCT/EP2019/074638
(87) Internationale Veröffentlichungsnummer: WO 2020/078630

(56) Entgegenhaltungen:
- EP-A1- 2 266 821
- EP-A1- 2 679 415
- EP-A2- 1 329 343
- DE-A1-102004 008 957
- DE-A1-102015 200 352
- US-A- 3 121 348

## Beschreibung

Die Erfindung betrifft ein Fahrwerkbauteil für eine Radaufhängung, umfassend eine zumindest eine Strebe aufweisende Strebenanordnung, die als ein Profilteil mit offener Querschnittsform ausgeführt ist, wobei die zumindest eine Strebe eine Profilbasis und zwei von dieser abgehende Wandabschnitte umfasst, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden zweiten Gelenkteil, vorgesehen ist, wobei die Wandabschnitte im Bereich des zumindest einen Gelenkpunktes einander gegenüberliegend angeordnet eine erste Gelenkaufnahmeöffnung und eine zweite Gelenkaufnahmeöffnung aufweisen, wobei zwischen die erste Gelenkaufnahmeöffnung und die zweite Gelenkaufnahmeöffnung eine zylindrische Hülse eingepresst ist, welche die einander gegenüberliegenden Wandabschnitte zueinander beabstandet.

Des Weiteren betrifft die Erfindung ein Verfahren zur Herstellung eines Fahrwerkbauteils, das eine zumindest eine Strebe aufweisende Strebenanordnung umfasst, die als ein Profilteil mit offener Querschnittsform hergestellt wird, wobei die zumindest eine Strebe eine Profilbasis und zwei von dieser abgehende Wandabschnitte aufweist, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden zweiten Gelenkteil, vorgesehen wird, wobei die Wandabschnitte im Bereich des zumindest einen Gelenkpunktes einander gegenüberliegend angeordnet eine erste Gelenkaufnahmeöffnung und eine zweite Gelenkaufnahmeöffnung aufweisen, wobei zwischen die erste Gelenkaufnahmeöffnung und die zweite Gelenkaufnahmeöffnung zunächst eine zylindrische Hülse einpresst wird, welche die einander gegenüberliegenden Wandabschnitte zueinander beabstandet.

Ein derartiges Fahrwerkbauteil und/oder ein solches Verfahren sind aus der EP 1 329 343 A2 oder der US 3 121 348 A oder EP 2 266 821 A bekannt. Die EP 1 329 343 A2 zeigt den Oberbegriff des Anspruchs 1, bzw. 13.

Darüber hinaus ist auch aus der DE 10 2013 002 285 A1 ein Fahrwerkbauteil für eine Radaufhängung bekannt. Die Herstellung des Fahrwerkbauteils, insbesondere das Einbringen der beweglich miteinander verbundenen Gelenkteile, erfordert einen hohen Montageaufwand. Das Profilteil ist ein Blechumformteil, welches aus einem Blechhalbzeug herstellbar ist, welches aus einem vorgelagerten Trennschritt, insbesondere Stanzen, resultiert.

Ausgehend vom vorstehend beschriebenen Stand der Technik ist es nun die Aufgabe der vorliegenden Erfindung, ein Fahrwerkbauteil bereitzustellen, welches sich durch eine Vereinfachung der Montage auszeichnet, insbesondere die Prozesssicherheit während der Montage verbessert.

Diese Aufgabe wird aus vorrichtungstechnischer Sicht ausgehend vom Oberbegriff des Anspruchs 1 in Verbindung mit dessen kennzeichnenden Merkmalen und aus verfahrenstechnischer Sicht ausgehend vom Oberbegriff des Anspruchs 13 in Verbindung mit dessen kennzeichnenden Merkmalen gelöst. Die hierauf jeweils folgenden, abhängigen Ansprüche geben jeweils vorteilhafte Weiterbildungen der Erfindung wieder.

Gemäß der Erfindung wird ein Fahrwerkbauteil für eine Radaufhängung vorgeschlagen, umfassend eine zumindest eine Strebe aufweisende Strebenanordnung, die als ein Profilteil mit offener Querschnittsform ausgeführt ist, wobei die zumindest eine Strebe eine Profilbasis und zwei von dieser abgehende Wandabschnitte umfasst, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden zweiten Gelenkteil, vorgesehen ist, wobei die Wandabschnitte im Bereich des zumindest einen Gelenkpunktes einander gegenüberliegend angeordnet eine erste Gelenkaufnahmeöffnung und eine zweite Gelenkaufnahmeöffnung aufweisen. Zur Vereinfachung der Montage ist erfindungsgemäß vorgesehen, dass zwischen die erste Gelenkaufnahmeöffnung und die zweite Gelenkaufnahmeöffnung eine zylindrische Hülse einpresst ist, welche die einander gegenüberliegenden Wandabschnitte zueinander beabstandet.

Die zwischen die erste Gelenkaufnahmeöffnung und die zweite Gelenkaufnahmeöffnung eingepresste Hülse trägt dazu bei, dem Fahrwerkbauteil in diesem Bereich eine erhöhte Steifigkeit zu verleihen. Zudem wird durch die Hülse das Profilteil zwischen der ersten Gelenkaufnahmeöffnung und der zweiten Gelenkaufnahmeöffnung auf ein erforderliches axiales Abstandsmaß gebracht, um Fertigungstoleranzen im Herstellprozess des Profilteils auszugleichen. Des Weiteren wird durch die Vormontage ein ungewolltes Aufweiten der Wandabschnitte im Bereich des zumindest einen Gelenkpunktes beim Umspritzen zur Herstellung des Gelenkgehäuses verhindert. Erfindungsgemäß sind in die eingepresste Hülse zumindest ein Sensorelement und der Gelenkkörper eingeführt, wobei die Hülse, das zumindest eine Sensorelement und der Gelenkkörper in ein durch Umspritzen hergestelltes Gelenkgehäuse, das den zweiten Gelenkteil ausbildet, integriert sind.

Das als das zweite Gelenkteil ausgebildete Gelenkgehäuse nimmt dabei das erste Gelenkteil und das zumindest eine Sensorelement während seiner Herstellung durch Umspritzen auf. Hierdurch entfällt der Montageschritt des Einpressens des ersten Gelenkteils in das Gelenkgehäuse. Ebenfalls entfällt ein zusätzlicher Montageschritt zur Anordnung des zumindest einen Sensorelementes. Zugleich dient das zweite Gelenkteil der unmittelbaren Lagerung des kugelförmigen Gelenkkörpers des ersten Gelenkteils, so dass die Verwendung einer Kugelschale entfallen kann.

Der Hülse kann eine Längsachse zugeordnet sein, welche auch eine Längsachse des ersten Gelenkteils sowie des Gelenkpunktes bildet. Eine quer zur Längsachse verlaufende Richtung wird insbesondere als radiale Richtung bezeichnet. Eine um die Längsachse herum verlaufende Richtung und/oder eine in Umfangsrichtung der Hülse oder des ersten Gelenkteils verlaufende Richtung werden insbesondere als Umfangsrichtung bezeichnet.

Bevorzugt kann die Hülse in ihrer Mantelfläche zumindest eine sich abschnittsweise in Umfangsrichtung erstreckende Öffnung aufweisen, welche der Hindurchführung des zumindest einen Sensorelementes dient. Dabei kann das zumindest eine Sensorelement bis an die Oberfläche des Gelenkkörpers herangeführt werden. Die insbesondere zylindrische Öffnung weist eine Ausdehnung auf, die zumindest den Außenabmessungen des Sensorelementes entspricht. Die Gelenkaufnahmeöffnungen sind bevorzugt jeweils als ein Durchzug im Blech der einander gegenüberliegenden Wandabschnitte ausgebildet. Dabei kann im jeweiligen Durchzug eine axiale Aussparung vorgesehen sein, deren Form mit dem Verlauf der Öffnung in der Mantelfläche der Hülse korrespondiert.

Insbesondere kann das zumindest eine Sensorelement zur Bestimmung der relativen Lage der beiden Gelenkteile zueinander eingerichtet sein. Die Bestimmung der Winkelstellung der beiden Gelenkteile kann zu einer Höhenstanderfassung herangezogen werden. Mittels der Höhenstanderfassung kann beispielsweise eine Leuchtweitenregulierung an einem Kraftfahrzeug realisiert werden.

Das zumindest eine Sensorelement kann bis unmittelbar an die Oberfläche des Gelenkkörpers herangeführt sein. Die Minimierung des radialen Abstands zwischen dem Sensorelement und der Oberfläche des Gelenkkörpers ermöglicht eine Realisierung unterschiedlicher Messverfahren zur Messung der Winkelstellung der beiden Gelenkteile zueinander.

Gemäß einer bevorzugten Ausführungsform kann das zumindest eine Sensorelement als ein magnetoresistiver Sensor ausgeführt sein.

Bei der Ausbildung des zumindest einen Sensorelements als ein magnetoresistiver Sensor kann in einer Ausnehmung auf der Oberfläche des Gelenkkörpers ein Positionsmagnet eingelassen sein, der dem Sensorelement zugeordnet ist. Der Wegfall der Kugelschale durch die unmittelbare Lagerung des Gelenkkörpers in dem durch Umspritzen hergestellten Gelenkgehäuse ermöglicht es, den Abstand zwischen dem Sensorelement und dem Positionsmagneten zu minimieren. Bevorzugt ist ein radialer Abstand zwischen der Oberfläche des Positionsmagneten und dem Sensorkopf des Sensorelementes von weniger als 1 mm, besonders bevorzugt ein Abstand von etwa 0,5 mm oder weniger erreichbar.

In bevorzugter Weiterbildung kann das Sensorelement zur Abdichtung der Ausnehmung und des darin angeordneten Positionsmagneten eingerichtet sein. Dadurch kann vermieden werden, dass beim Umspritzen zur Herstellung des Gelenkgehäuses Material in die Ausnehmung des Gelenkkörpers sowie zwischen den Positionsmagneten und das Sensorelement gelangt. Zur Abdichtung der Ausnehmung kann an dem Sensorelement ein Abdeckelement vorgesehen sein, welches über der Ausnehmung platziert wird. Das Abdeckelement weist vorzugsweise eine mit der Form der Ausnehmung korrespondiere Kontur auf. Somit kann das Abdeckelement die Ausnehmung an ihren Rändern überlappen und vollständig abdecken. Das Sensorelement mit dem Abdeckelement wird vor dem Umspritzen an die Oberfläche des Gelenkkörpers herangeführt. Die Ausrichtung des Sensorelementes erfolgt lotrecht zu der Ausnehmung im Gelenkkörper, so dass das Abdeckelement die Ausnehmung vollständig abdichten kann.

Ein weiterer Vorteil des Ausbildens des Gelenkgehäuses als unmittelbares Lager des Gelenkkörpers besteht darin, dass alternative Sensorkonzepte umgesetzt werden können. Die erfindungsgemäße Ausgestaltung des durch Umspritzen hergestellten und unmittelbar auf dem Gelenkkörper des ersten Gelenkteils aufgebrachten Gelenkgehäuses ermöglicht die Verwendung eines als Inkrementalgeber ausgeführten Sensorelementes als eine Alternative zu der Verwendung eines magnetoresistiven Sensorelements.

Bevorzugt kann das als Inkrementalgeber ausgeführte Sensorelement zur photoelektrischen Abtastung oder zur magnetischen Abtastung eingerichtet sein. Dabei kann der zur photoelektrischen Abtastung eingerichtete Inkrementalgeber nach einem abbildenden Messprinzip oder einem interferentiellen Messprinzip arbeiten. Der Eingriff in die Oberfläche des Gelenkkörpers kann bei der Verwendung eines als Inkrementalgeber ausgeführten Sensorelementes minimiert werden. Insbesondere kann die Ausnehmung auf der Oberfläche des Gelenkkörpers, die der Aufnahme des Positionsmagneten dient, entfallen. Weiterhin kann der Gelenkkörper in die Hülse eingeführt werden, ohne dass es dabei einer spezifischen Positionierung der Oberfläche des Gelenkkörpers gegenüber dem Sensorelement bedarf. Hierdurch wird das Einführen des ersten Gelenkteils in die Hülse vor dem Umspritzen vereinfacht.

Vorzugsweise kann auf der Oberfläche des Gelenkkörpers eine in Umfangsrichtung verlaufende Maßverkörperung vorgesehen sein. Die Maßverkörperung ist entsprechend der Ausgestaltung respektive des angewandten Messprinzips des Inkrementalgebers ausgeführt. Die Maßverkörperung kann im Wesentlichen band- oder streifenförmig ausgebildet sein. Die Maßverkörperung kann sich zumindest abschnittsweise in Umfangsrichtung über die Oberfläche des Gelenkkörpers erstrecken. Vorteilhaft ist dabei, dass die Maßverkörperung in einer Weise auf oder in den Gelenckörper einbringbar ist, so dass diese nahezu oder keine Unregelmäßigkeiten auf der Oberfläche des Gelenkkörpers verursacht. Das Positionieren des zumindest einen Sensorelementes kann mit einem weiter verringerten radialen Abstand erfolgen, als dies bei einem magnetoresistiven Sensor der Fall ist, insbesondere wenn dieser zugleich der Abdichtung der Ausnehmung des Positionsmagneten dient.

Bevorzugt kann die Maßverkörperung als ein Polrad, ein Magnetband oder als ein Strichcode ausgeführt sein. So kann das Magnetband in eine auf der Oberfläche des Gelenkkörpers eingearbeitete Nut eingelassen sein. Denkbar ist auch, das Magnetband oder das Polrad auf der Oberfläche des Gelenkkörpers aufzukleben. Eine als Strichcode ausgeführte Maßverkörperung kann ebenfalls in eine Nut eingelassen oder auf der Oberfläche des Gelenkkörpers aufgeklebt werden. Dabei kann die Tiefe der Nut so gewählt sein, dass die Maßverkörperung nahezu bündig oder bündig mit der angrenzenden Oberfläche der Lauffläche abschließt. Zudem kann der im Wesentlichen band- oder streifenförmige ausgeführte Strichcode durch Rändelung, Gravur oder Lasern zumindest abschnittsweise umlaufend in die Oberfläche des Gelenckörpers eingearbeitet werden. Die Tiefe der Nut ist gegenüber der Tiefe der Ausnehmung zur Aufnahme des Positionsmagneten deutlich geringer, so dass eine geringere Schwächung des Gelenkkörpers vorliegt.

Insbesondere können das erste Gelenkteil und das zweite Gelenkteil Bestandteile eines Kugelhülsengelenks sein.

Bevorzugt kann das Fahrwerkbauteil ein Lenker, insbesondere ein Querlenker, sein.

Weiterhin wird die eingangs gestellte Aufgabe durch ein Verfahren zur Herstellung eines Fahrwerkbauteils mit den Merkmalen des Anspruches 13 gelöst.

Gemäß dem Anspruch 13 wird ein Verfahren zur Herstellung eines Fahrwerkbauteils vorgeschlagen, das eine zumindest eine Strebe aufweisende Strebenanordnung umfasst, die als ein Profilteil mit offener Querschnittsform hergestellt wird, wobei die zumindest eine Strebe eine Profilbasis und zwei von dieser abgehende Wandabschnitte aufweist, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden zweiten Gelenkteil, vorgesehen wird, wobei die Wandabschnitte im Bereich des zumindest einen Gelenkpunktes einander gegenüberliegend angeordnet eine erste Gelenkaufnahmeöffnung und eine zweite Gelenkaufnahmeöffnung aufweisen, wobei zwischen die erste Gelenkaufnahmeöffnung und die zweite Gelenkaufnahmeöffnung zunächst eine zylindrische Hülse einpresst wird, welche die einander gegenüberliegenden Wandabschnitte zueinander beabstandet.

Erfindungsgemäß werden in die eingepresste Hülse zumindest ein Sensorelement und der Gelenkkörper eingeführt, und anschließend werden die Hülse sowie das zumindest eine Sensorelement und der Gelenkkörper in ein durch Umspritzen hergestelltes Gelenkgehäuse, das den zweiten Gelenkteil ausbildet, integriert.

Durch das erfindungsgemäße Verfahren wird die Anzahl an erforderlichen Montageschritten reduziert. Insbesondere wird durch die Hülse das Profilteil zwischen der ersten Gelenkaufnahmeöffnung und der zweiten Gelenkaufnahmeöffnung auf ein erforderliches axiales Abstandsmaß gebracht, um Fertigungstoleranzen im Herstellprozess des Profilteils auszugleichen. Des Weiteren wird durch die Vormontage der Hülse ein ungewolltes Aufweiten der Wandabschnitte im Bereich des zumindest einen Gelenkpunktes beim Umspritzen zur Herstellung des Gelenkgehäuses verhindert.

Vorteilhafte Ausführungsformen der Erfindung, die nachfolgend erläutert werden, sind in den Zeichnungen dargestellt. Es zeigt:
- Fig. 1: eine perspektivische Teilansicht eines profilierten Fahrwerkbauteils;
- Fig. 2: eine perspektivische Teilansicht gemäß Fig. 1 mit einer in das profilierte Fahrwerkbauteil einzuführenden Hülse;
- Fig. 3: eine perspektivische Teilansicht des Fahrwerkbauteils gemäß Fig. 2 mit eingepresster Hülse und einem einzuführenden ersten Gelenkteil;
- Fig. 4: eine perspektivische Teilansicht des Fahrwerkbauteils gemäß Fig. 3 mit in die Hülse eingeführtem ersten Gelenkteil sowie Sensorelement;
- Fig. 5: eine perspektivische Teilansicht des Fahrwerkbauteils gemäß Fig. 4 mit einem durch Umspritzen hergestellten zweiten Gelenkbauteil;
- Fig. 6: eine perspektivische Ansicht eines ersten Gelenkteils gemäß einer weiteren Ausführungsform;
- Fig. 7: eine perspektivische Ansicht des ersten Gelenkteils gemäß Fig. 6 mit einer darauf angeordneten Maßverkörperung;
- Fig. 8: eine perspektivische Ansicht des ersten Gelenkteils gemäß Fig. 7 mit einem diesem zugeordneten Sensorelement.

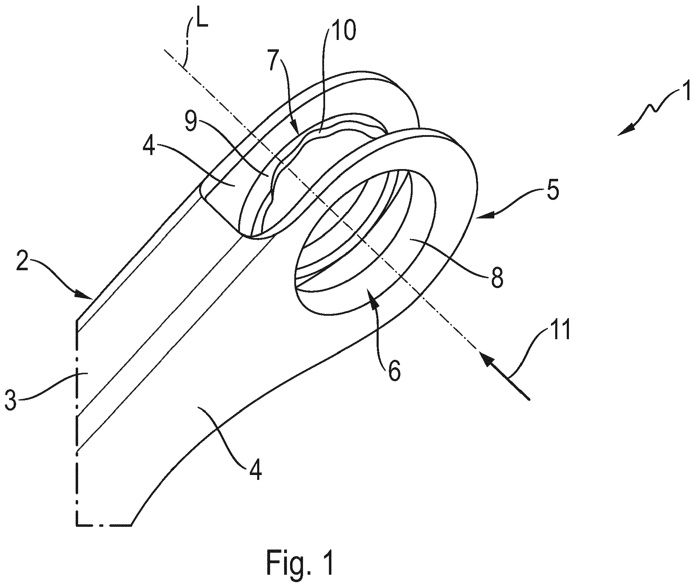

In Fig. 1 ist eine perspektivische Teilansicht eines profilierten Fahrwerkbauteils 1 dargestellt. Das Fahrwerkbauteil 1 ist in dem dargestellten Ausführungsbeispiel als ein Zweipunktlenker oder Querlenker ausgeführt. Das Fahrwerkbauteil 1 umfasst eine zumindest eine Strebe 2 aufweisende Strebenanordnung, die als ein Profilteil mit offener Querschnittsform ausgeführt ist. Das Profilteil ist ein Blechumformteil, welches aus einem Blechhalbzeug herstellbar ist, welches aus einem vorgelagerten Trennschritt, insbesondere Stanzen, resultiert. Die zumindest eine Strebe 2 umfasst eine Profilbasis 3 und zwei von dieser abgehenden Wandabschnitte 4. Das Profilteil kann zumindest abschnittsweise einen im Wesentlichen U-förmigen Querschnitt aufweisen. An zumindest einem Ende der Strebe 2 ist ein Gelenkpunkt 5 zur Aufnahme zweier beweglich miteinander verbundener Gelenkteile vorgesehen. -

In dem Gelenkpunkt 5 weist die Strebe 2 eine erste Gelenkaufnahmeöffnung 6 und eine zweite Gelenkaufnahmeöffnung 7 auf. Dem Gelenkpunkt 5 ist eine Längsachse L zugeordnet. Eine quer zu der Längsachse L bzw. quer zur axialen Richtung 11 verlaufende Richtung wird insbesondere als radiale Richtung bezeichnet. Die Gelenkaufnahmeöffnungen 6, 7 sind bevorzugt jeweils als Durchzug 8, 9 im Blech der beiden Wandabschnitte 4 ausgebildet. Dabei sind die freien Enden der Durchzüge 8, 9 der Wandabschnitte 4 des Fahrwerkbauteils 1 zum Inneren des Profilteils hin gerichtet. Die Durchzüge 8, 9 der ersten Gelenkaufnahmeöffnung 6 und der zweiten Gelenkaufnahmeöffnung weisen in Umfangsrichtung gesehen eine nahezu geschlossene Mantelfläche auf. Die Durchzüge 8, 9 sind jeweils an einer Stelle durch eine axiale Aussparung 10 unterbrochen, wobei in der Darstellung in Fig. 1 aufgrund der perspektivischen Darstellung nur die Aussparung 10 in dem Durchzug 9 der zweiten Gelenkaufnahmeöffnung 7 sichtbar ist. Die Aussparung 10 in dem Durchzug 8 der ersten Gelenkaufnahmeöffnung 6 ist spiegelsymmetrisch ausgeführt.

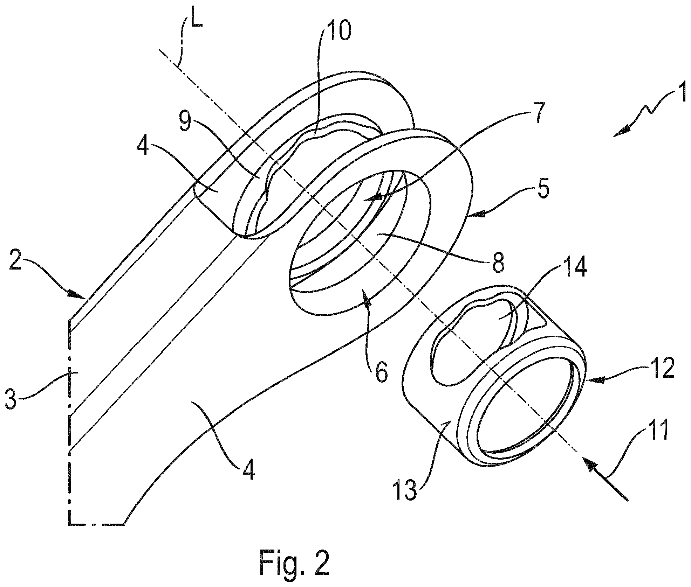

Fig. 2 zeigt eine perspektivische Teilansicht gemäß Fig. 1 mit einer in das profilierte Fahrwerkbauteil 1 einzuführenden Hülse 12. Die Hülse 12 ist zylindrisch mit einem im Wesentlichen kreisförmigen Querschnitt ausgebildet und weist eine Mantelfläche 13 auf. In der Mantelfläche 13 der Hülse 12 ist zumindest eine zylindrische Öffnung 14 angeordnet. Die Öffnung 14 erstreckt sich abschnittsweise in Umfangrichtung der Hülse 12. Die Kontur der Öffnung 14 in Umfangsrichtung der Hülse 12 korrespondiert im Wesentlichen mit der jeweiligen Kontur der Aussparungen 10 in den Durchzügen 8, 9. Die Hülse 12 wird in axialer Richtung 11 in den Gelenkpunkt 5 eingeführt und zwischen den Wandabschnitten 4 eingepresst. Hierdurch wird das toleranzbehaftete Profilteil hinsichtlich des axialen Abstandes der ersten und zweiten Gelenkaufnahmeöffnung 6 7 auf Maß gebracht. Zudem wird eine Versteifung des Profilteils im Bereich des Gelenkpunktes 5 erreicht. Die Hülse 12 wird bevorzugt aus einem Metall hergestellt.

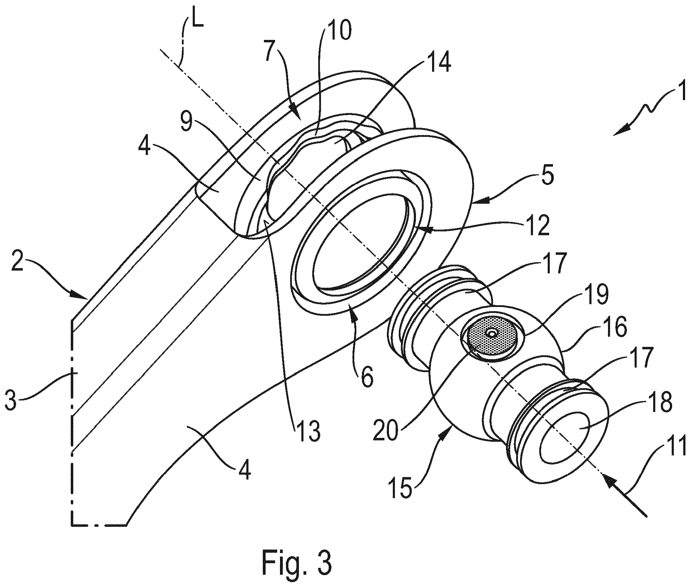

In Fig. 3 ist eine perspektivische Teilansicht des Fahrwerkbauteils 1 gemäß Fig. 2 mit eingepresster Hülse 12 und einem in die Hülse 12 einzuführenden ersten Gelenkteil 15 gezeigt. Das erste Gelenkteil 15 weist einen kugelförmigen Gelenkkörper 16 auf, an dem endseitig jeweils ein zylindrischer Zapfen 17 angeordnet ist, die sich koaxial zur Längsachse L erstrecken. Der Gelenkkörper 16 und die Zapfen 17 weisen eine zur Längsachse L koaxiale Durchgangsbohrung 18 auf. Auf der Oberfläche des Gelenkkörpers 16 ist eine kreiszylindrische Ausnehmung 19 vorgesehen, in der ein Positionsmagnet 20 eingelassen ist. Das erste Gelenkteil 15 wird in axialer Richtung 11 in die Hülse 12 eingeführt. Dabei wird das Gelenkteil 15 derart positioniert, dass die Ausnehmung 19 bzw. der Positionsmagnet 20 im Wesentlichen unterhalb der Öffnung 14 in der Hülse 12 liegt, damit diese in radialer Richtung frei zugänglich sind. Das erste Gelenkteil 15 wird bevorzugt aus einem Metall hergestellt.

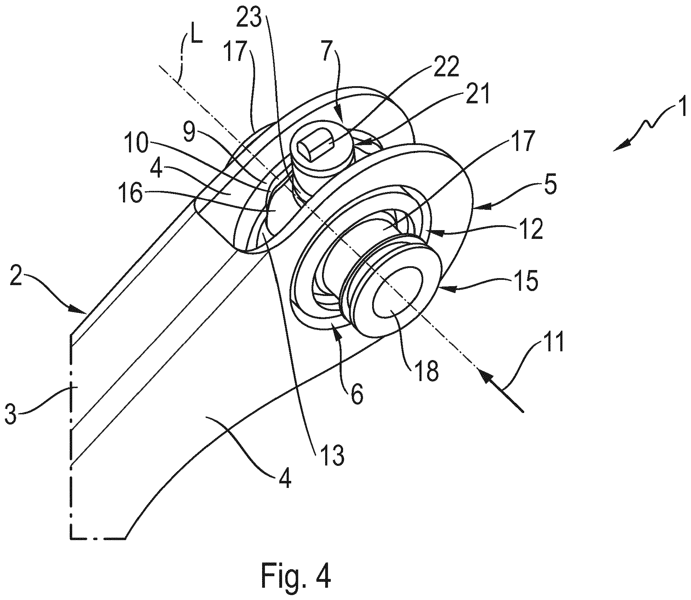

Fig. 4 zeigt eine perspektivische Teilansicht des Fahrwerkbauteils 1 gemäß Fig. 3 mit dem in die Hülse 12 eingeführten ersten Gelenkteil 15 sowie einem Sensorelement 21. Das Sensorelement 21 ist als magnetoresistiver Sensor ausgeführt, der dem Positionsmagneten 20 zugeordnet wird. Das Sensorelement 21 wird von außen durch die Aussparungen 10 in den Durchzügen und die korrespondierend ausgebildete Öffnung 14 in der Hülse 12 an die Oberfläche des Gelenkkörpers 16 herangeführt. Das Sensorelement 21 wird lotrecht zu dem Positionsmagneten 20 ausgerichtet. Das Sensorelement 21 weist an seinem freien Ende einen Anschluss 22 zur Verbindung mit einer Signalleitung 26 auf. Am gegenüberliegenden Ende des Sensorelementes 21 ist ein Abdeckelement 23 angeordnet. Das Abdeckelement 23 wird oberhalb der Ausnehmung 19 auf dem Gelenkkörper 16 positioniert, wobei es die Ausnehmung 19 vollständig überdeckt. Der radiale Abstand zwischen dem Sensorkopf des Sensorelementes 21 und dem Positionsmagneten 20 bestimmt sich nach der Materialstärke des Abdeckelementes 23 in diesem Bereich. Der radiale Abstand beträgt insbesondere weniger als 1 mm, besonders bevorzugt kann der radiale Abstand etwa 0,5 mm betragen.

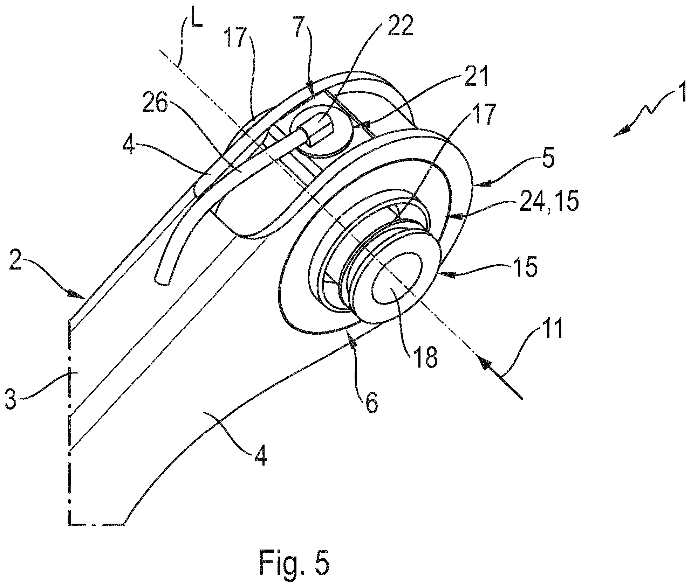

In Fig. 5 ist eine perspektivische Teilansicht des Fahrwerkbauteils 1 gemäß Fig. 4 mit einem durch Umspritzen hergestellten zweiten Gelenkbauteil 24 gezeigt. Das zweite Gelenkbauteil 24 ist als Gelenkgehäuse 25 ausgebildet, in welchem der Gelenkkörper 16 unmittelbar gelagert ist. Das zumindest abschnittsweise Umspritzen des ersten Gelenkbauteils 15, des Sensorelementes 21 sowie der Hülse 12 zwischen und an den Außenseiten der Wandabschnitte 4 im Gelenkpunkt 5 erfolgt im Montagespritzgussverfahren. Ein Aufweiten der Wandabschnitte 4 im Bereich des zumindest einen Gelenkpunktes 5 beim Umspritzen zur Herstellung des Gelenkgehäuses 25 wird durch die Hülse 12 verhindert. Durch das Abdeckelement 23 wird der imperfekte Bereich, die Ausnehmung 19, in der Oberfläche des Gelenkkörpers 16 gegen das Eindringen von Material beim Spritzgießen abgedichtet. Dadurch wird es ermöglicht, auf die vorherige Anordnung einer Kugelschale auf dem Gelenkkörper 16 zu verzichten, welche üblicherweise die Imperfektion abdeckt und der Lagerung des Gelenkkörpers in dem Gelenkgehäuse dient. An den Anschluss 22 des Sensorelements 21 ist die Signalleitung 26 angeschlossen, durch welche die von dem Sensorelement 21 erzeugten Signale an eine übergeordnete Steuerungsvorrichtung eines Fahrzeugs, in welchem das Fahrwerkbauteil 1 verbaut ist, übermittelt werden können.

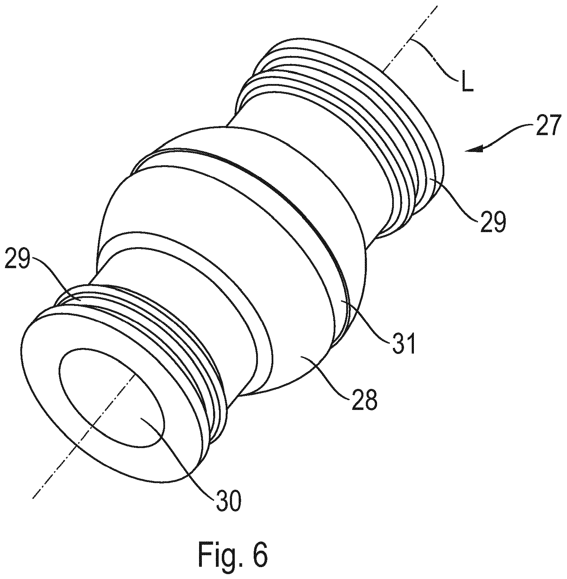

Die Darstellung in Fig. 6 zeigt eine perspektivische Ansicht eines ersten Gelenkteils 27 gemäß einer alternativen Ausführungsform. Das erste Gelenkteil 27 umfasst zwei Zapfen 29 sowie einen zwischen diesen befindlichen kugelförmigen Gelenkkörper 28. Das erste Gelenkteil 27 ist aus einem Metall gefertigt. Anstelle einer Ausnehmung zur Aufnahme eines Positionsmagneten weist der Gelenkkörper 28 eine umlaufende Nut 31 auf seiner Oberfläche auf, in der eine Maßverkörperung 32 angeordnet ist.

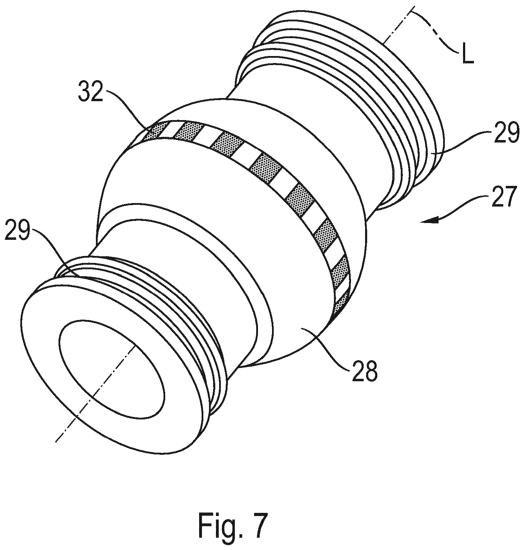

In Fig. 7 ist eine perspektivische Ansicht des ersten Gelenkteils 27 gemäß Fig. 6 mit einer darauf angeordneten Maßverkörperung 32 dargestellt. Die Maßverkörperung 32 ist in die Nut 31 eingelassen. Wie aus der Darstellung ersichtlich, kann die umlaufende Nut 31 in dem Gelenkkörper 28 durch die Maßverkörperung 32 derart ausgefüllt wenden, dass nahezu keine Imperfektionen auf der Oberfläche des Gelenkkörpers 28 auftreten.

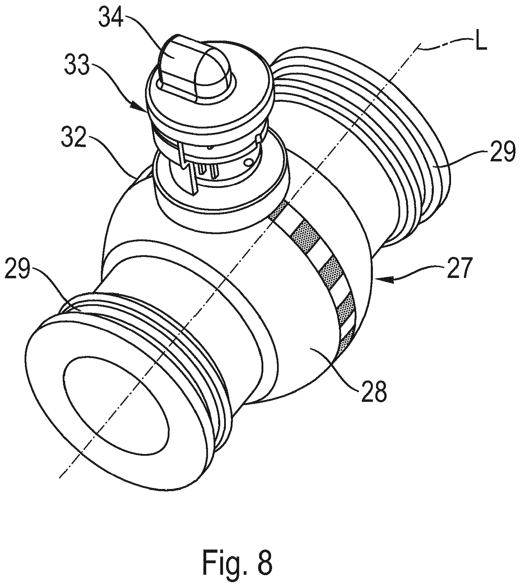

Fig. 8 zeigt eine perspektivische Ansicht des ersten Gelenkteils 27 gemäß Fig. 7 mit dem zumindest einen relativ zu dem Gelenkkörper 28 bzw. der Maßverkörperung 32 positionierten Sensorelement 33. Das Sensorelement 33 weist an seinem freien Ende einen Anschluss 34 zur Verbindung mit einer Signalleitung auf. Das Sensorelement 33 kann mit einem minimalen Abstand zur Oberfläche des Gelenkkörpers 28 positioniert werden, bevor zumindest der Gelenkkörper 28 des ersten Gelenkteils 27 und das Sensorelement 33 in das durch Umspritzen hergestellte Gelenkgehäuse 25 integriert werden. Dabei ist die Anordnung des Gelenkkörpers 28 in der Hülse 12 vor dem Umspritzen unabhängiger von einer spezifischen Positionierung der Oberfläche des Gelenkkörpers 28 gegenüber dem Sensorelement 33, als dies bei dem als magnetoresistiver Sensor ausgeführten Sensorelement 21 der Fall ist.

Bei dieser Ausführungsform ist das zumindest eine Sensorelement 33, das in das Gelenkgehäuse 25 durch das Umspritzen integriert wird, als ein Inkrementalgeber ausgebildet ist. Hierzu kann das zumindest eine als Inkrementalgeber ausgebildete Sensorelement 33 zur magnetischen Abtastung oder zur photoelektrischen Abtastung eingerichtet sein. Die dafür erforderliche Maßverkörperung 32 kann als ein Polrad oder ein Magnetband bzw. als ein Strichcode ausgeführt sein. Die Anordnung der Maßverkörperung 32 erfolgt in dem dargestellten Ausführungsbeispiel in der umlaufenden Nut 31 auf der Oberfläche des Gelenkkörpers 28. Die Nut 31 verläuft koaxial zur Längsachse L im Bereich des größten Außendurchmessers des Gelenkkörpers 28. Die Tiefe der Nut 31 ist gegenüber der Ausnehmung 19 für den Positionsmagneten 20 in dem Gelenkkörpers 16 gemäß der ersten Ausführungsform deutlich geringer, so dass eine geringere Schwächung des Gelenkkörpers 28 vorliegt.

Eine Ausführung der Maßverkörperung 32 als ein Strichcode kann durch Rändeln, Gravieren oder Lasern auf der Oberfläche des Gelenkkörpers 28 erzeugt werden. Ebenso kann eine Strichcodierung in die Nut 31 eingebracht werden. Im einfachsten Fall kann eine Strichcodierung auf den Gelenkkörper 28 aufgeklebt werden. Auch bei dieser Ausgestaltung der Maßverkörperung 32 liegt nur ein minimaler Eingriff in die Oberflächenkontur des Gelenkkörpers 28 vor.

### Bezugszeichen

- 1: Fahrwerkbauteil
- 2: Strebe
- 3: Profilbasis
- 4: Wandabschnitt
- 5: Gelenkpunkt
- 6: Gelenkaufnahmeöffnung
- 7: Gelenkaufnahmeöffnung
- 8: Durchzug
- 9: Durchzug
- 10: Aussparung
- 11: Axiale Richtung
- 12: Hülse
- 13: Mantelfläche von 12
- 14: Öffnung
- 15: Erstes Gelenkteil
- 16: Gelenkkörper
- 17: Zapfen
- 18: Durchgangsbohrung
- 19: Ausnehmung
- 20: Positionsmagnet
- 21: Sensorelement
- 22: Anschluss
- 23: Abdeckelement
- 24: Zweites Gelenkteil
- 25: Gelenkgehäuse
- 26: Signalleitung
- 27: Erstes Gelenkteil
- 28: Gelenkkörper
- 29: Zapfen
- 30: Durchgangsbohrung
- 31: Nut
- 32: Maßverkörperung
- 33: Sensorelement
- 34: Anschluss
- L: Längsachse

## Patentansprüche

1. Fahrwerkbauteil (1) für eine Radaufhängung, umfassend eine zumindest eine Strebe (2) aufweisende Strebenanordnung, die als ein Profilteil mit offener Querschnittsform ausgeführt ist, wobei die zumindest eine Strebe (2) eine Profilbasis (3) und zwei von dieser abgehende Wandabschnitte (4) umfasst, wobei an zumindest einem Ende der Strebe (2) ein Gelenkpunkt (5) zur Aufnahme zweier beweglich miteinander verbundener Gelenkteile (15, 24, 27), einem einen kugelförmigen Gelenkkörper (16, 28) aufweisenden ersten Gelenkteil (15, 27) und einem den Gelenkkörper (16, 28) dreh- und/oder schwenkbar aufnehmenden zweiten Gelenkteil (24), vorgesehen ist, wobei die Wandabschnitte (4) im Bereich des zumindest einen Gelenkpunktes (5) einander gegenüberliegend angeordnet eine erste Gelenkaufnahmeöffnung (6) und eine zweite Gelenkaufnahmeöffnung (7) aufweisen, wobei zwischen die erste Gelenkaufnahmeöffnung (6) und die zweite Gelenkaufnahmeöffnung (7) eine zylindrische Hülse (12) eingepresst ist, welche die einander gegenüberliegenden Wandabschnitte (4) zueinander beabstandet, **dadurch gekennzeichnet, dass** in die eingepresste Hülse (12) zumindest ein Sensorelement (21, 33) und der Gelenkkörper (16, 28) eingeführt sind, wobei die Hülse (12), das Sensorelement (21, 33) und der darin eingeführte Gelenkkörper (16, 28) in ein durch Umspritzen hergestelltes Gelenkgehäuse (25), das den zweiten Gelenkteil (24) ausbildet, integriert sind.

2. Fahrwerkbauteil (1) nach Anspruch 1, **dadurch gekennzeichnet, dass** die Hülse (12) in ihrer Mantelfläche (13) zumindest eine sich abschnittsweise in Umfangsrichtung erstreckende Öffnung (14) aufweist, welche der Hindurchführung des zumindest einen Sensorelementes (21, 33) dient.

3. Fahrwerkbauteil (1) nach Anspruch 1 oder 2, **dadurch gekennzeichnet, dass** das zumindest eine Sensorelement (21. 33) zur Bestimmung der relativen Lage der beiden Gelenkteile (15, 24, 27) zueinander eingerichtet ist.

4. Fahrwerkbauteil (1) nach einem der Ansprüche 1 bis 3, **dadurch gekennzeichnet, dass** das zumindest eine Sensorelement (21, 33) bis unmittelbar an die Oberfläche des Gelenkkörpers (16, 28) herangeführt ist.

5. Fahrwerkbauteil (1) nach einem der Ansprüche 1 bis 4, **dadurch gekennzeichnet, dass** das zumindest eine Sensorelement (21) als ein magnetoresistiver Sensor ausgeführt ist.

6. Fahrwerkbauteil (1) nach Anspruch 5, **dadurch gekennzeichnet, dass** in einer Ausnehmung (19) an der Oberfläche des Gelenkkörpers (16) ein Positionsmagnet (20) eingelassen ist, der dem Sensorelement (21) zugeordnet ist.

7. Fahrwerkbauteil (1) nach Anspruch 6, **dadurch gekennzeichnet, dass** das Sensorelement (21) zur Abdichtung der Ausnehmung (19) und des darin angeordneten Positionsmagneten (20) eingerichtet ist.

8. Fahrwerkbauteil (1) nach einem der Ansprüche 1 bis 4, **dadurch gekennzeichnet, dass** das Sensorelement (33) als ein Inkrementalgeber ausgeführt ist.

9. Fahrwerkbauteil (1) nach Anspruch 8, **dadurch gekennzeichnet, dass** das als Inkrementalgeber ausgeführte Sensorelement (33) zur photoelektrischen Abtastung oder zur magnetischen Abtastung eingerichtet ist.

10. Fahrwerkbauteil (1) nach Anspruch 8 oder 9, **dadurch gekennzeichnet, dass** auf der Oberfläche des Gelenkkörpers (28) eine in Umfangsrichtung verlaufende Maßverkörperung (32) vorgesehen ist.

11. Fahrwerkbauteil (1) nach Anspruch 10, **dadurch gekennzeichnet, dass** die Maßverkörperung (32) als ein Magnetband oder als ein Strichcode ausgeführt ist.

12. Fahrwerkbauteil (1) nach einem der Ansprüche 1 bis 11, **dadurch gekennzeichnet, dass** das erste Gelenkteil (15, 27) und das zweite Gelenkteil (24) Bestandteile eines Kugelhülsengelenks sind, vorzugsweise ist das Fahrwerkbauteil (1) ein Lenker, insbesondere ein Querlenker.

13. Verfahren zur Herstellung eines Fahrwerkbauteils (1), das eine zumindest eine Strebe (2) aufweisende Strebenanordnung umfasst, die als ein Profilteil mit offener Querschnittsform hergestellt wird, wobei die zumindest eine Strebe (2) eine Profilbasis (3) und zwei von dieser abgehende Wandabschnitte (4) aufweist, wobei an zumindest einem Ende der Strebe (2) ein Gelenkpunkt (5) zur Aufnahme zweier beweglich miteinander verbundener Gelenkteile (15, 24, 28), einem einen kugelförmigen Gelenkkörper (16, 28) aufweisenden ersten Gelenkteil (15, 27) und einem den Gelenkkörper (16, 28) dreh- und/oder schwenkbar aufnehmenden zweiten Gelenkteil (24), vorgesehen wird, wobei die Wandabschnitte (4) im Bereich des zumindest einen Gelenkpunktes (5) einander gegenüberliegend angeordnet eine erste Gelenkaufnahmeöffnung (6) und eine zweite Gelenkaufnahmeöffnung (7) aufweisen, wobei zwischen die erste Gelenkaufnahmeöffnung (6) und die zweite Gelenkaufnahmeöffnung (7) zunächst eine zylindrische Hülse (12) einpresst wird, welche die einander gegenüberliegenden Wandabschnitte (4) zueinander beabstandet, **dadurch gekennzeichnet, dass** in die eingepresste Hülse (12) zumindest ein Sensorelement (21, 33) und der Gelenkkörper (16, 28) eingeführt werden, wobei die Hülse (12), das zumindest eine Sensorelement (21, 33) und der Gelenkkörper (16, 28) in ein durch Umspritzen hergestelltes Gelenkgehäuse (25), das den zweiten Gelenkteil (24) ausbildet, integriert werden.

## Claims

1. Chassis component (1) for a wheel suspension, comprising a strut arrangement which has at least one strut (2) and which is configured as a profile part having an open cross-sectional shape, wherein the at least one strut (2) comprises a profile base (3) and two wall portions (4) emanating therefrom, wherein a joint point (5) is provided on at least one end of the strut (2) for receiving two movably interconnected joint parts (15, 24, 27), namely a first joint part (15, 27) having a spherical joint body (16, 28) and a second joint part (24) rotatably and/or pivotably receiving the joint body (16, 28), wherein the wall portions (4) have, in the region of the at least one joint point (5), a first joint receiving opening (6) and a second joint receiving opening (7) which are arranged opposite one another, wherein a cylindrical sleeve (12) is pressed in between the first joint receiving opening (6) and the second joint receiving opening (7) and spaces apart the wall portions (4) situated opposite one another, **characterized in that** at least one sensor element (21, 33) and the joint body (16, 28) are inserted into the pressed-in sleeve (12), wherein the sleeve (12), the sensor element (21, 33) and the joint body (16, 28) inserted therein are integrated into a joint housing (25) which is produced by overmoulding and which forms the second joint part (24).

2. Chassis component (1) according to Claim 1, **characterized in that** the sleeve (12) has, in its lateral surface (13), at least one opening (14) which partially extends in the circumferential direction and which serves to guide through the at least one sensor element (21, 33) .

3. Chassis component (1) according to Claim 1 or 2, **characterized in that** the at least one sensor element (21, 33) is designed to determine the relative position of the two joint parts (15, 24, 27) relative to one another.

4. Chassis component (1) according to one of Claims 1 to 3, **characterized in that** the at least one sensor element (21, 33) is led directly up to the surface of the joint body (16, 28).

5. Chassis component (1) according to one of Claims 1 to 4, **characterized in that** the at least one sensor element (21) is configured as a magneto resistive sensor.

6. Chassis component (1) according to Claim 5, **characterized in that** a position magnet (20), which is assigned to the sensor element (21), is embedded in a cutout (19) in the surface of the joint body (16).

7. Chassis component (1) according to Claim 6, **characterized in that** the sensor element (21) is designed to seal the cutout (19) and the position magnet (20) arranged therein.

8. Chassis component (1) according to one of Claims 1 to 4, **characterized in that** the sensor element (33) is configured as an incremental encoder.

9. Chassis component (1) according to Claim 8, **characterized in that** the sensor element (33) configured as an incremental encoder is designed for photoelectric scanning or for magnetic scanning.

10. Chassis component (1) according to Claim 8 or 9, **characterized in that** a measuring scale (32) extending in the circumferential direction is provided on the surface of the joint body (28).

11. Chassis component (1) according to Claim 10, **characterized in that** the measuring scale (32) is configured as a magnetic strip or as a barcode.

12. Chassis component (1) according to one of Claims 1 to 11, **characterized in that** the first joint part (15, 27) and the second joint part (24) are constituent parts of a ball sleeve joint, the chassis component (1) preferably being a link, in particular a transverse link.

13. Method for producing a chassis component (1) which comprises a strut arrangement which has at least one strut (2) and which is produced as a profile part having an open cross-sectional shape, wherein the at least one strut (2) has a profile base (3) and two wall portions (4) emanating therefrom, wherein a joint point (5) is provided on at least one end of the strut (2) for receiving two movably interconnected joint parts (15, 24, 28), namely a first joint part (15, 27) having a spherical joint body (16, 28) and a second joint part (24) rotatably and/or pivotably receiving the joint body (16, 28), wherein the wall portions (4) have, in the region of the at least one joint point (5), a first joint receiving opening (6) and a second joint receiving opening (7) which are arranged opposite one another, wherein firstly a cylindrical sleeve (12) is pressed in between the first joint receiving opening (6) and the second joint receiving opening (7) and spaces apart the wall portions (4) situated opposite one another, **characterized in that** at least one sensor element (21, 33) and the joint body (16, 28) are inserted into the pressed-in sleeve (12), wherein the sleeve (12), the at least one sensor element (21, 33) and the joint body (16, 28) are integrated into a joint housing (25) which is produced by overmoulding and which forms the second joint part (24).

## Revendications

1. Elément de train de roulement (1) pour une suspension de roue, comprenant un agencement d'entretoises présentant au moins une entretoise (2) et qui est réalisé sous forme de pièce profilée ayant une forme de section transversale ouverte, ladite au moins une entretoise (2) comprenant une base profilée (3) et deux sections de paroi (4) partant de celle-ci, dans lequel un point d'articulation (5) est prévu à au moins une extrémité de l'entretoise (2) pour recevoir deux pièces d'articulation (15, 24, 27) reliées ensemble de manière mobile, une première pièce d'articulation (15, 27) présentant un corps d'articulation sphérique (16, 28) et une deuxième pièce d'articulation (24) recevant le corps d'articulation (16, 28) en rotation et/ou en pivotement, dans lequel les sections de paroi (4) présentent au niveau du au moins un point d'articulation (5) une première ouverture de réception d'articulation (6) et une deuxième ouverture de réception d'articulation (7), selon une disposition opposée l'une à l'autre, dans lequel, entre la première ouverture de réception d'articulation (6) et la deuxième ouverture de réception d'articulation (7), une douille cylindrique (12) est enfoncée qui espace l'une par rapport à l'autre les sections de paroi (4) mutuellement opposées,
**caractérisé en ce qu'**au moins un élément capteur (21, 33) et le corps d'articulation (16, 28) sont insérés dans la douille (12) enfoncée, la douille (12), l'élément capteur (21, 33) et le corps d'articulation (16, 28) inséré dans celle-ci étant intégrés dans un boîtier d'articulation (25) fabriqué par surmoulage et qui réalise la deuxième pièce d'articulation (24).

2. Elément de train de roulement (1) selon la revendication 1, **caractérisé en ce que** la douille (12) présente dans sa surface latérale (13) au moins une ouverture (14) s'étendant par sections dans la direction circonférentielle et qui sert au passage du au moins un élément capteur (21, 33).

3. Elément de train de roulement (1) selon la revendication 1 ou 2, **caractérisé en ce que** ledit au moins un élément capteur (21, 33) est conçu pour déterminer la position relative des deux pièces d'articulation (15, 24, 27) l'une par rapport à l'autre.

4. Elément de train de roulement (1) selon l'une quelconque des revendications 1 à 3, **caractérisé en ce que** ledit au moins un élément capteur (21, 33) est rapproché directement jusqu'à la surface du corps d'articulation (16, 28).

5. Elément de train de roulement (1) selon l'une quelconque des revendications 1 à 4, **caractérisé en ce que** ledit au moins un élément capteur (21) est réalisé sous la forme d'un capteur magnétorésistif.

6. Elément de train de roulement (1) selon la revendication 5, **caractérisé en ce qu'**un aimant positionneur (20) est encastré dans un creux (19) à la surface du corps d'articulation (16) et est associé à l'élément capteur (21).

7. Elément de train de roulement (1) selon la revendication 6, **caractérisé en ce que** l'élément capteur (21) est conçu pour rendre étanche le creux (19) et l'aimant positionneur (20) disposé dans celui-ci.

8. Elément de train de roulement (1) selon l'une quelconque des revendications 1 à 4, **caractérisé en ce que** l'élément capteur (33) est réalisé sous la forme d'un codeur incrémental.

9. Elément de train de roulement (1) selon la revendication 8, **caractérisé en ce que** l'élément capteur (33) réalisé sous forme de codeur incrémental est conçu pour un balayage photoélectrique ou pour un balayage magnétique.

10. Elément de train de roulement (1) selon la revendication 8 ou 9, **caractérisé en ce qu'**une mesure matérialisée (32) s'étendant dans la direction circonférentielle est prévue à la surface du corps d'articulation (28).

11. Elément de train de roulement (1) selon la revendication 10, **caractérisé en ce que** la mesure matérialisée (32) est réalisée sous la forme d'une piste magnétique ou d'un code barres.

12. Elément de train de roulement (1) selon l'une quelconque des revendications 1 à 11, **caractérisé en ce que** la première pièce d'articulation (15, 27) et la deuxième pièce d'articulation (24) sont des composants d'une articulation à douille sphérique, l'élément de train de roulement (1) étant de préférence un bras oscillant, en particulier un bras oscillant transversal.

13. Procédé de fabrication d'un élément de train de roulements (1) comprenant un agencement d'entretoises présentant au moins une entretoise (2) et qui est fabriqué sous la forme d'une pièce profilée ayant une forme de section transversale ouverte, ladite au moins une entretoise (2) présentant une base profilée (3) et deux sections de paroi (4) partant de celle-ci, dans lequel un point d'articulation (5) est prévu à au moins une extrémité de l'entretoise (2) pour recevoir deux pièces d'articulation (15, 24, 28) reliées ensemble de manière mobile, une première pièce d'articulation (15, 27) présentant un corps d'articulation sphérique (16, 28) et une deuxième pièce d'articulation (24) recevant le corps d'articulation (16, 28) en rotation et/ou en pivotement, dans lequel les sections de paroi (4) présentent au niveau du au moins un point d'articulation (5) une première ouverture de réception d'articulation (6) et une deuxième ouverture de réception d'articulation (7), selon une disposition opposée l'une à l'autre, dans lequel, entre la première ouverture de réception d'articulation (6) et la deuxième ouverture de réception d'articulation (7), d'abord une douille cylindrique (12) est enfoncée qui espace l'une par rapport à l'autre les sections de paroi (4) mutuellement opposées,
**caractérisé en ce qu'**au moins un élément capteur (21, 33) et le corps d'articulation (16, 28) sont insérés dans la douille (12) enfoncée, la douille (12), ledit au moins un élément capteur (21, 33) et le corps d'articulation (16, 28) étant intégrés dans un boîtier d'articulation (25) fabriqué par surmoulage et qui réalise la deuxième pièce d'articulation (24).
